# EUROPÄISCHE PATENTANMELDUNG

(11) **EP 0 959 349 A2**
(43) Veröffentlichungstag der Anmeldung: **24.11.1999**
(21) Anmeldenummer: 99250130.4
(22) Anmeldetag: 22.04.1999
(51) Int. Cl.: G01N 27/82

(54) **Streuflusssonde zur zerstörungsfreien Prüfung von langgestreckten, rotationssymmetrischen Körpern**

(30) Priorität: 18.05.1998 DE 19823453
(71) Anmelder: MANNESMANN Aktiengesellschaft, 40213 Düsseldorf (DE)
(72) Erfinder: Artz, Norbert, 41469 Neuss (DE); Graff, Alfred, 45239 Essen (DE); Rohde, Hans-Jürgen, 47249 Duisburg (DE); Nitsche, Stefan, 45473 Mülheim (DE)
(74) Vertreter: Meissner, Peter E., Dipl.-Ing.

(57) **Zusammenfassung**

Die Erfindung betrifft eine Streuflußsonde zur zerstörungsfreien Prüfung von langgestreckten, rotationssymmetrischen Körpern, insbesondere Rohre, auf Längs- und / oder Querfehler bestehend aus einer Leiterfolie, die auf der dem zu prüfenden Körper zugewandten Seite mit einer Vielzahl darauf bedruckter Spulen versehen ist, die in einem als Schuh ausgebildeten Haltekörper abdichtend angeordnet ist und die die Spulen verbindenden Leitungen nach außen zu einem Steckeranschluß geführt sind und die dem Körper zugewandte Seite der Leiterfolie zugleich Schutzschicht ist, wobei die Sonde in Achsrichtung des Körpers liegend angeordnet ist und relativ zu dem sich bewegenden Körper rotiert. Dabei ist die Leiterfolie als beidseitig bedruckte Leiterplatte (6) ausgebildet, wobei auf der die Leitungsbahnen (26) aufweisenden Leiterplattenseite ein Platinenstecker (10) angeordnet ist, der mit einer komplementär dazu ausgebildeten Platinenbuchse (12) zusammenwirkt, die wiederum mit einem am Haltekörper (1) befestigbaren Mehrfachpol-Stecker-Element (5) zusammenwirkt.

## Beschreibung

Die Erfindung betrifft eine Streuflußsonde zur zerstörungsfreien Prüfung von langgestreckten, rotationssymmetrischen Körpern, insbesondere Rohre, auf Längs- und / oder Querfehler gemäß dem Oberbegriff des Patentanspruches 1.

Der Einsatz von Streuflußsonden zur zerstörungsfreien Prüfung von langgestreckten, rotationssymmetrischen Körpern, insbesondere Rohre, zur Detektierung von Längs- und / oder Querfehlern im oberflächennahen Bereich setzt sich mehr und mehr durch als Ersatz für die bisher vorgeschriebene Dichtheitsprüfung nach SEP 1925 und der visuellen Sichtprüfung als Abnahmeprüfung. Eine zerstörungsfreie Prüfung hat den Vorteil, daß sie im Fluß der Fertigungslinie erfolgen kann, reproduzierbar objektiv und damit unabhängig vom subjektiven Entscheidungskriterium des Prüfers ist.

Die bekannte Streuflußsonde weist eine Leiterfolie auf, die nur einseitig auf der dem zu prüfenden Körper abgewandten Seite mit einer Vielzahl von darauf bedruckten Spulen versehen ist. Diese Leiterfolie wird abdichtend in einem als Schuh ausgebildeten Haltekörper angeordnet, wobei die dem zu prüfenden Körper zugewandte Folienseite zugleich Schutzschicht ist. An jede einzelne Spule ist eine Leitung angelötet, wobei die Vielzahl der Leitungen als Kabelbaum aus dem Haltekörper herausgeführt sind und mit einem üblichen Mehrfachpolstecker verbunden ist. Die Sonde mit den Lötanschlüssen des Kabels wird aus Schutzgründen mit einem Gießharz abgedeckt.

Diese bekannte Ausbildung ist nachteilig, da zum einen das Verbinden der Leitungen mit jeder einzelnen Spule nur von Hand unter einer Lupe erfolgen kann. Eine solche Arbeit ist zeitlich und personell aufwendig. Von weiterem Nachteil ist, daß bei Ausfall einer oder mehrerer Spulen die Sonde verworfen werden muß. Falls für eine bestimmte Fehlerdetektierung eine Leiterplatte mit anders angeordneten Spulen erforderlich ist, können nur Komplett-Sonden mit entsprechendem Spulensystem Verwendung finden.

Aufgabe der Erfindung ist es, eine Streuflußsonde der gattungsmäßigen Art anzugeben, die es erlaubt, in einfacher Weise die Leiterplatte mit der Elektronikeinheit zu verbinden und beschädigte oder anders gestaltete Leiterplatten mit nur geringem Aufwand auswechseln zu können.

Diese Aufgabe wird ausgehend vom Oberbegriff in Verbindung mit den Merkmalen des kennzeichnenden Teiles des Patentanspruches 1 gelöst. Vorteilhafte Weiterbildungen sind Bestandteil von Unteransprüchen.

Erfindungsgemäß wird statt der bisher üblichen einseitig bedruckten Leiterfolie eine beidseitig bedruckte Leiterplatte verwendet, wobei auf der dem zu prüfenden Körper abgewandten Seite die die Spulen verbindenden Leiterbahnen aufgedruckt sind. Diese Leiterbahnen münden in einem Platinenstecker, der auf dieser Seite der Leiterplatte befestigt ist. Der Platinenstecker wirkt mit einer komplementär dazu ausgebildeten Platinenbuchse zusammen, die vorzugsweise auf einer als Adapter ausgebildeten Platine angeordnet ist. Auf dieser Adapter-Platine sind verzinnte Bohrungen vorgesehen, in die ein Mehrfachpol-Steckerelement einlötbar ist. Diese Anordnung hat den Vorteil, daß nach dem Lösen der Schrauben, mit denen die Leiterplatte am Haltekörper befestigt ist, die Leiterplatte von der Adapter-Platine und die Leiterplatte damit in einfacher Weise gewechselt werden kann. Dabei spielt es keine Rolle, ob die Leiterplatte wegen Ausfall einer oder mehrerer Spulen oder wegen einer gezielten Änderung der Spulenrichtungen ausgewechselt werden muß. Auf die Anordnung einer Adapter-Platine kann verzichtet werden, wenn man durch ein geeignetes Element den Platinenstecker der Leiterplatte mit dem Mehrfachpol-Stecker-Element direkt verbinden kann.

Je nach Gegebenheiten der Anlage kann es vorteilhaft sein, wenn der Platinenstecker in der Mitte der Leiterplatte und die Aufnahme versetzt zur Platinenbuchse auf der Adapter-Platine angeordnet sind. Die zusätzlichen Kosten für die Herstellung einer Adapter-Platine und die etwas teurere Leiterplatte wiegen bei weitem die Kosten der Handarbeit für das Anlöten der einzelnen Leitungen mit den Spulen auf.

Die Vorteile des erfindungsgemäßen modularen Aufbaus der Streuflußsonde sind
- eine Kostenreduktion um bis zu 90% beim Austausch einer defekten Sonde
- jedes Einzelteil, z. B. Kabel, Adapterplatine, Leiterplatte ist austauschbar und ersetzbar
- eine verringerte, kostengünstigere Lagerhaltung

In der Zeichnung wird anhand eines Ausführungsbeispieles die erfindungsgemäß ausgebildete Streuflußsonde näher erläutert. Es zeigen:
- Figur 1 a, b, c, d: Schnitt und Draufsicht eines Haltekörpers sowie Unter- und Oberseite einer erfindungsgemäß ausgebildeten Leiterplatte
- Figur 2: in einer Seitenansicht einer quasi Explosionsdarstellung die Leiterplatte im Zusammenwirken mit einer erfindungsgemäß ausgebildeten Adapter-Platine, Haltekörper und Stecker

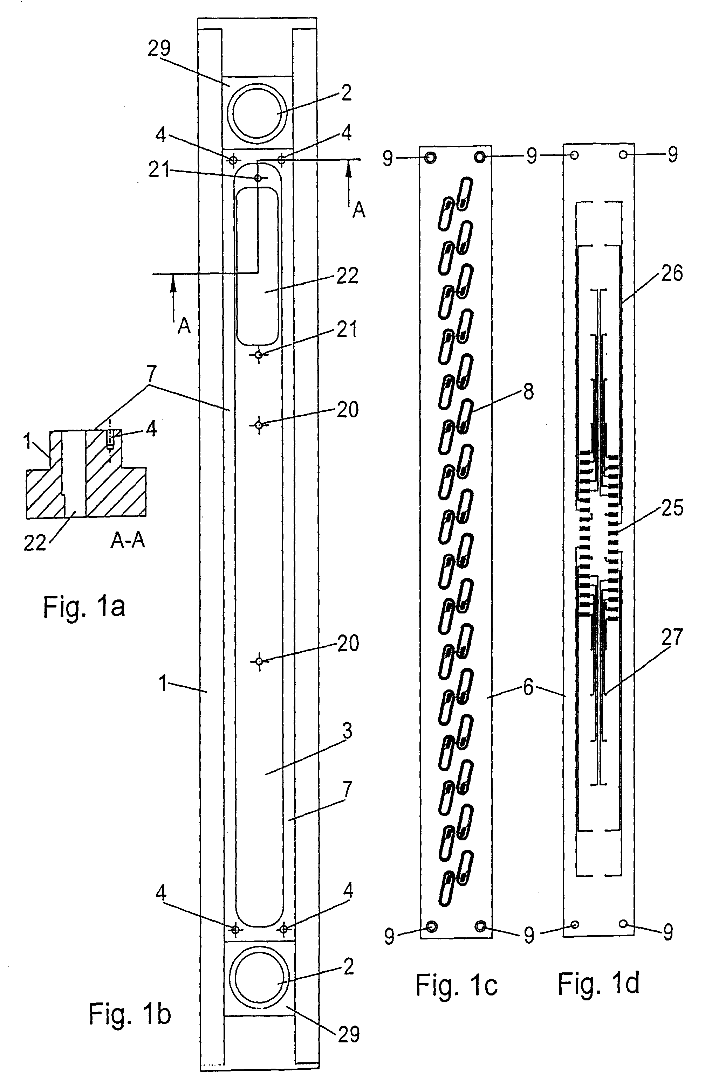

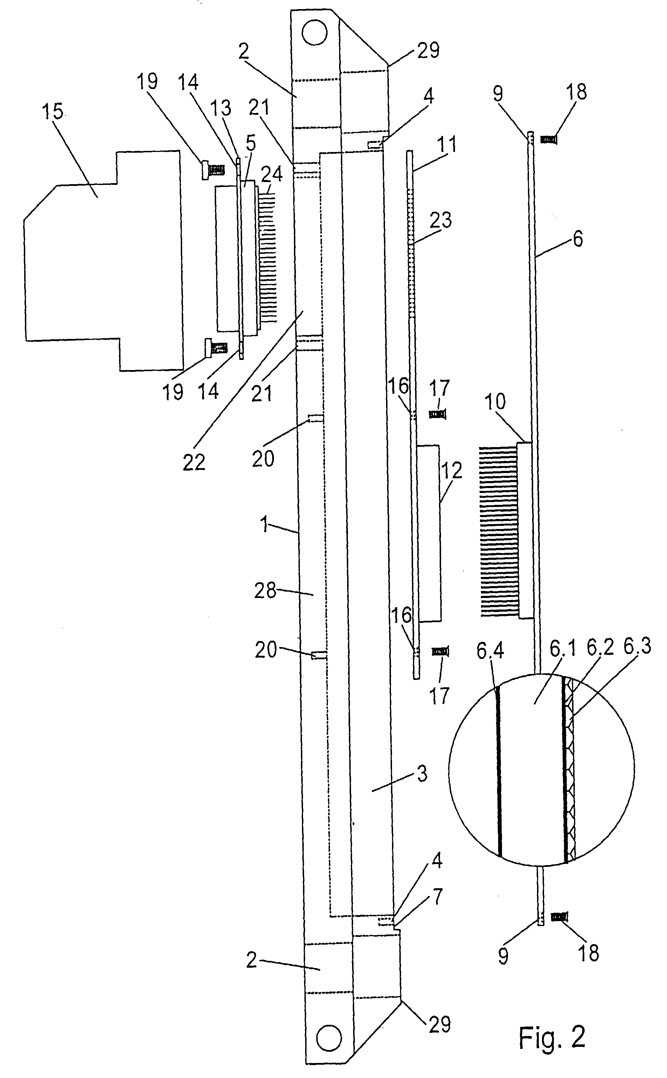

In Figur 1a ist in einem Schnitt und in Figur 1b ist in einer Draufsicht ein schuhartig ausgebildeter Haltekörper 1 dargestellt. Er weist in seinen Endbereichen 29 je eine Gewindebohrung 2 auf, zur Aufnahme von höhenverstellbaren Gleitsteinen (hier nicht dargestellt), die die Streuflußsonde auf Abstand zum prüfenden Körper hält. Der langgestreckte Mittelbereich ist mit einer Ausnehmung 3 versehen, die einen verbleibenden Randbereich 7 aufweist. Im Boden 28 des Haltekörpers 1 ist in einem Endbereich ein Fenster 22 vorgesehen, durch das ein Mehrfachpol-Stecker-Element 5 (Figur 2) hindurchsteckbar ist. Zur Befestigung einer Adapter-Platine 11 sind im Mittenbereich des Bodens 28 zwei Gewindesacklochbohrungen 20 angeordnet. Die Befestigung der Leiterplatte 6 (Figur 1c, 1d) erfolgt über vier im Randbereich 7 angeordnete Gewindesacklochbohrungen 4. Im Randbereich des Fensters 22 sind zwei Gewindebohrungen 21 vorgesehen, um das Mehrfachpol-Stecker-Element 5 befestigen zu können.

Die Figuren 1c, d zeigen in einer Draufsicht und in einer Unteransicht die erfindungsgemäß ausgebildete Leiterplatte 6. Auf der dem zu prüfenden Körper zugewandten Seite der Leiterplatte 6 sind eine Vielzahl von Spulen 8 aufgedruckt. Die hier gezeigte Anordnung ist nur ein Beispiel, da die Winkellagen und die Geometrie der Spulen je nach Prüferfordernis frei gewählt werden können. In den beiden Endbereichen der Leiterplatte 6 sind Bohrungen 9 vorgesehen, um die Leiterplatte 6 mittels Senkschrauben 18 auf dem Randbereich 7 des Haltekörpers 1 befestigen zu können.

Die in Figur 1d dargestellte Oberseite der Leiterplatte 6 zeigt die die einzelnen Spulen 8 von der jeweiligen Durchkontaktierung 27 zu den Lötpads 25 verbindenden Leiterbahnen 26.

Figur 2 zeigt in einer quasi Explosionsdarstellung die wesentlichen Bauelemente eines Ausführungsbeispieles der erfindungsgemäß ausgebildeten Streuflußsonde. Auf der Unterseite der Leiterplatte 6 ist ein Platinenstecker 10 befestigt, der über die Lötpads 25 mit der Leiterplatte 6 verbunden wird. Im Zusammenwirken mit diesem Platinenstecker 10 ist auf der Oberseite einer Adapterplatine 11 eine komplementär zum Platinenstecker 10 ausgebildete Platinenbuchse 12 angeordnet. In Längsrichtung versetzt zur Platinenbuchse 12 sind auf der Adapter-Platine 11 verzinnte Bohrungen 23 vorgesehen, um das Mehrfachpol-Stecker-Element 5 einlöten zu können. Die Befestigung der Adapterplatine 11 erfolgt über Bohrungen 16, durch die Senkschrauben 17 hindurchsteckbar sind. Diese sind in die im Boden 28 des Haltekörpers 1 angeordneten Gewindesacklochbohrungen 20 einschraubbar. Die Befestigung des Mehrfachpol-Stecker-Elementes 5 am Haltekörper 1 erfolgt über im Kragen 13 angeordnete Bohrungen 14, durch die Zylinderkopfschrauben 19 hindurchsteckbar sind. Diese sind in die im Randbereich des Fensters 22 des Haltekörpers 1 angeordneten Gewindebohrungen 21 einschraubbar. Zum Schutz des Mehrfachpol-Stecker-Elementes 5 ist ein aufsteckbares Gehäuse 15 vorgesehen. Die Dicke der Leiterplatte 6 und die Tiefe des Randbereiches 7 sind so aufeinander abgestimmt, daß nach der Befestigung der Leiterplatte 6 auf dem Haltekörper 1 die Seite mit den Spulen 8 bündig mit dem Randbereich 29 des Haltekörpers 1 abschließt.

In der in Figur 2 dargestellten Vergrößerung ist der Aufbau der erfindungsgemäß ausgebildeten Leiterplatte 6 gut zu erkennen. Der Trägerkörper 6.1 ist in diesem Ausführungsbeispiel ca. 3 mm dick. Auf der Oberseite mit einer dick ausgezogenen Linie kenntlich gemacht, befindet sich die Schicht 6.2 mit den einzelnen gedruckten Spulen 8 (siehe Figur 1c). Auf dieser Schicht 6.2 ist eine dem zu prüfenden Körper zugewandte Schutzschicht 6.3 angeordnet. Diese ist ca. 0,1 mm dick. Auf der Unterseite des Trägerkörpers 6.1 ist eine zweite Schicht 6.4 angeordnet mit den darauf gedruckten Leiterbahnen 26, Lötpads 25 und Druckkontaktierungen 27 (siehe Figur 1d).

### Bezugszeichenliste

| **Nummer** | **Bezeichnung** |
|---|---|
| 1 | Haltekörper |
| 2 | Gewindebohrung |
| 3 | Ausnehmung |
| 4 | Gewindesacklochbohrung |
| 5 | Mehrfachpol-Stecker-Element |
| 6 | Leiterplatte |
| 6.1 | Trägerkörper |
| 6.2 | gedruckte Spulenschicht |
| 6.3 | Schutzschicht |
| 6.4 | gedruckte Leiterschicht |
| 7 | Randbereich |
| 8 | gedruckte Spule |
| 9 | Bohrung |
| 10 | Platinenstecker |
| 11 | Adapter-Platine |
| 12 | Platinen-Buchse |
| 13 | Kragen |
| 14 | Bohrung |
| 15 | Gehäuse für Stecker |
| 16 | Bohrung |
| 17 | Senkschraube |
| 18 | Senkschraube |
| 19 | Zylinderkopfschraube |
| 20 | Gewindesacklochbohrung |
| 21 | Gewindebohrung |
| 22 | Fenster |
| 23 | verzinnte Bohrungen zum Einlöten des Steckers 5 |
| 24 | Einlötkontakte |
| 25 | Lötpads für Leiterplattenstecker 10 |
| 26 | Leiterbahn |
| 27 | Durchkontaktierung |
| 28 | Boden |
| 29 | Endbereich |

## Patentansprüche

1. Streuflußsonde zur zerstörungsfreien Prüfung von langgestreckten, rotationssymmetrischen Körpern, insbesondere Rohre, auf Längs- und / oder Querfehler bestehend aus einer Leiterfolie, die auf der dem zu prüfenden Körper zugewandten Seite mit einer Vielzahl darauf bedruckter Spulen versehen ist, die in einem als Schuh ausgebildeten Haltekörper abdichtend angeordnet ist und die die Spulen verbindenden Leitungen nach außen zu einem Steckeranschluß geführt sind und die dem Körper zugewandte Seite der Leiterfolie zugleich Schutzschicht ist, wobei die Sonde in Achsrichtung des Körpers liegend angeordnet ist und relativ zu dem sich bewegenden Körper rotiert,
dadurch gekennzeichnet,
daß die Leiterfolie als beidseitig bedruckte Leiterplatte (6) ausgebildet ist, wobei auf der die Leitungsbahnen (26) aufweisenden Leiterplattenseite ein Platinenstecker (10) angeordnet ist, der mit einer komplementär dazu ausgebildeten Platinenbuchse (12) zusammenwirkt, die wiederum mit einem am Haltekörper (1) befestigbaren Mehrfachpol-Stecker-Element (5) zusammenwirkt.

2. Streuflußsonde nach Anspruch 1,
dadurch gekennzeichnet,
daß zwischen der Platinenbuchse (10) und dem Mehrfachpol-Stecker-Element (5) eine Adapter-Platine (11) angeordnet ist, die mit einer komplementär zum Platinenstecker (10) ausgebildeten Platinenbuchse (12) und mit verzinnten Bohrungen (23) zur Befestigung des Mehrfachpol-Stecker-Elementes (5) versehen ist.

3. Streuflußsonde nach Anspruch 1 und 2,
dadurch gekennzeichnet,
daß der Platinenstecker (10) in der Mitte der Leiterplatte (6) angeordnet ist.

4. Streuflußsonde nach Anspruch 1 und 2,
dadurch gekennzeichnet,
daß die verzinnten Bohrungen (23) in Längsrichtung versetzt zur Platinenbuchse (12) auf der Adapter-Platine (11) angeordnet sind.
